# EUROPÄISCHE PATENTANMELDUNG

(11) **EP 1 067 382 A2**
(43) Veröffentlichungstag der Anmeldung: **10.01.2001**
(21) Anmeldenummer: 00114077.1
(22) Anmeldetag: 07.07.2000
(51) Int. Cl.: G01N 33/15, G01N 15/08

(54) **Permeationszelle zur in-vitro-Bestimmung der Hautpermeation von pharmazeutischen Wirkstoffen**

(30) Priorität: 07.07.1999 DE 29911790 U
(71) Anmelder: Novosis Pharma AG, 80807 München (DE)
(72) Erfinder: Schenk, Dirk, 83623 Dietramszell (DE); Gassner, German, 86316 Friedberg (DE)
(74) Vertreter: Biagosch, Stephan (DE)

(57) **Zusammenfassung**

Eine Permeationszelle zur in-vitro-Bestimmung der Hautpermeation von pharmazeutischen Wirkstoffen, die eine Donorkammer (34) und eine davon trennbare Akzeptorkammer (4), ein dazwischenliegendes Fenster zur abgedichteten Aufnahme einer Hautmembran sowie abgedichtet verschließbare Füll- und Entleerungsöffnungen an beiden Kammern aufweist, kennzeichnet sich dadurch, daß die Akzeptorkammer (4) als im Betrieb aufrechtstehendes zylindrisches Gefäß mit oberseitigem Verschluß (8; 50; 80) und seitlicher Fensteröffnung (6) in seinem bodennahen Bereich und die Donorkammer (34) als radial daran anschließender, an seinem Außenende verschließbarer Stutzen ausgebildet ist, daß die Akzeptorkammer (4) bis auf ihren Verschluß (8; 50; 80) entnehmbar in ein sie passend umschließendes Gehäuse (10) eingesetzt ist, welches im Bereich der Fensteröffnung (6) der Akzeptorkammer eine entsprechende, etwas weitere Durchbrechung (30) aufweist, und daß der die Donorkammer (34) bildende Stutzen konzentrisch zu der Fensteröffnung (6) abnehmbar an das Gehäuse anschraubbar ist. Dadurch erhält die Permeationszelle Standfestigkeit, sie ist ebenso leicht handhabbar wie herstellbar, wobei sich Hilfsmittel etwa zum Anbringen der Hautmembran erübrigen, und die Akzeptorkammer enthält nur ein geringes Totvolumen. Bei Ausbildung des Gehäuses (10) im wesentlichen in Blockform können mehrere solche Permeationszellen aneinanderschließend in eine gemeinsame Heiz- und/oder Rührvorrichtung eingesetzt werden.

## Beschreibung

Die Erfindung betrifft eine Permeationszelle gemäß Gattungsbegriff des Patentanspruchs 1.

Eine derartige Permeationszelle ist als sog. Franz-Zelle in der Form bekannt und gebräuchlich ist, daß eine glockenförmige Donorkammer auf eine aufrechtstehende topfförmige Akzeptorkammer unter Zwischenlage eines flachen Edelstahlringes und eines Dichtungsringes aufsetzbar ist, wobei die Donorkammer ein in ihrem Inneren mit einer Glocke endendes Füllrohr und die Akzeptorkammer ein seitlich schräg nach oben herausführendes Rohr zur manuellen Probenentnahme aufweist. Eine Membran in Gestalt eines Hautpräparats muß auf den Edelstahlring aufgeklebt werden, und sodann müssen die vorerwähnten Teile der Franz-Zelle abdichtend miteinander verklebt werden. Eine solche Ausführung ist verhältnismäßig kompliziert handhabbar und besitzt zudem den Nachteil, daß sich infolge Entgasung des Akzeptormediums Gasblasen an der Unterseite der Membran ansammeln, durch welche die Diffusion des Wirkstoffs aus dem Donorbereich gestört wird und sich erheblich schwankende Permeationsergebnisse einstellen.

Es ist zwar auch bereits eine Permeationszelle vorgeschlagen worden, bei der die Membran im Betrieb vertikal verläuft und die Akzeptorkammer mittels zweier Anschlußstutzen für eine automatische Auswertung in eine sog. HPLC-(= High-Pressure-Liquid-Chromatography-)Anlage oder dergl. einfügbar ist. Zudem befindet sich innerhalb der Akzeptorkammer ein seitens einer externen Magnetrührvorrichtung drehend antreibbares Magnetrührstäbchen. Bei dieser Ausführung ist jedoch eine unregelmäßig geformte Donorkammer vermittels eines Rahmens und einer Arretierschraube um eine Fensteröffnung herum an die ebenso unregelmäßig geformte Akzeptorkammer ansetzbar, womit diese Ausführung kompliziert und auch wiederum umständlich zu handhaben ist. Darüber hinaus besitzt die Akzeptorkammer ein verhältnismäßig großes Totvolumen, so daß an der Membran keine ohne weiteres kontrollierbaren Strömungsverhältnisse erreichbar sind.

Davon ausgehend liegt der Erfindung die Aufgabe zugrunde, eine Permeationszelle mit den Merkmalen des Gattungsbegriffs so auszubilden, daß sie ebenso einfach aufgebaut wie zu handhaben ist und die Ansammlung von Gasblasen an der Membran vermeidet. Darüber hinaus sollen an der Membran prognostizierbare gleichmäßige Strömungsverhältnisse erzielbar sein.

Diese Aufgabe ist im wesentlichen durch die Kennzeichnungsmerkmale des Anspruchs 1 gelöst. Die Unteransprüche geben darüber hinausgehend vorteilhafte Ausgestaltungsmöglichkeiten an.

Die betreffende Ausbildung der Akzeptorkammer als aufrechtstehendes zylindrisches Gefäß mit seitlicher Fensteröffnung im bodennahen Bereich, der Einschluß der Akzeptorkammer in ein diese passend umschließendes Gehäuse und die Ausbildung der Donorkammer als eine radial in bezug auf die zylindrische Akzeptorkammer daran anschraubbarer Stutzen ergeben eine ebenso einfach herstellbare wie anwendbare Permeationszelle mit vertikaler Membran und geringen Totvolumina in beiden Kammern. Zudem ermöglicht die Ausbildung des Gehäuses als im wesentlichen quaderförmiger Block gemäß Anspruch 10 ein ökonomisches Einsetzen mehrerer solcher Permeationszellen nebeneinander in ein Heizwasserbad mit Rührplatte oder dergleichen.

Nachfolgend wird ein derzeit bevorzugtes Ausführungsbeispiel der Erfindung samt einer Variante anhand der Figuren genauer beschrieben. Von diesen zeigt
Fig. 1 eine Seitenansicht der betreffenden Permeationszelle von der Stirnseite ihrer zylindrischen Donorkammer her gesehen,
Fig. 2 eine Seitenansicht der gleichen Permeationszelle aus einem gegenüber demjenigen nach Fig. 1 senkrechten Blickwinkel, teilweise geschnitten,
Fig. 3 eine Draufsicht auf die gleiche Permeationszelle,
Fig. 4 ein Schema der Donor- und der Akzeptorkammer der gleichen Permeationszelle, größtenteils geschnitten,
Fig. 5 einen Schnitt durch einen anderen Verschluß der Akzeptorkammer einer ansonsten gleichen Permeationszelle, der deren Anschluß an eine HPLC-Anlage ermöglicht, und
Fig. 6 einen Schnitt durch noch einen weiteren Verschluß der Akzeptorkammer zur Ermöglichung einer laufenden Probenentnahme für eine HPLC-Anlage oder dergl..

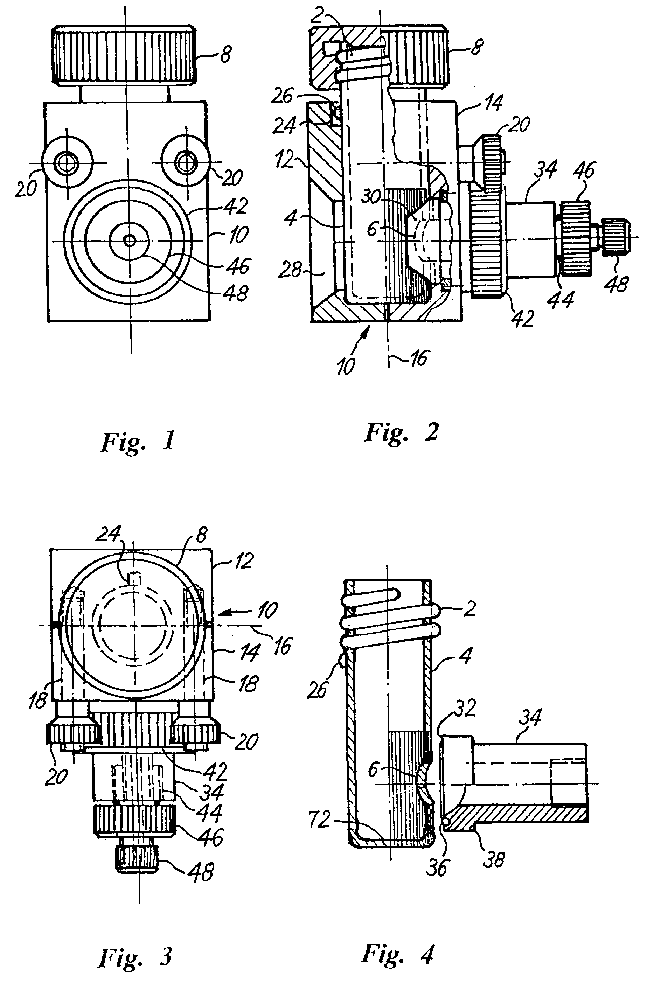

Wie insbesondere aus den Figuren 2 und 4 zu erkennen, weist die betreffende Permeationszelle eine zylindrische, unten geschlossene und an ihrem oberen Endbereich mit einem Außengewinde 2 versehene Akzeptorkammer 4 auf, die gewöhnlich aus Glas besteht. Die Akzeptorkammer 4 besitzt in ihrem unteren Abschnitt eine im wesentlichen kreisrunde seitliche Fensteröffnung 6, auf deren Rand im Gebrauch auf noch beschriebene Weise von außen her der Rand der (nicht gezeigten) Hautmembran zur Auflage kommt. Den Verschluß der Akzeptorkammer 4 bildet ein geschlossener und ein zu dem Gewinde 2 der Akzeptorkammer passendes Innengewinde aufweisender Schraubdeckel 8.

Im zusammengebauten Zustand der gezeigten Permeationszelle ist die Akzeptorkammer 4 von einem zweiteiligen, blockförmigen Gehäuse 10 mit den beiden Gehäuseteilen 12 und 14 umschlossen, die entlang einer zur Achse der Fensteröffnung 6 senkrechten Längsmittelebene 16 der Akzeptorkammer 4 zumindest annähernd aufeinandertreffen und durch zwei Schraubbolzen 18 an dem Gehäuseteil 12 und zwei nach Aufsetzen des Gehäuseteils 14 darauf aufgebrachte Rändelmuttern 20 zusammengehalten werden. Das so gebildete Gehäuse 10 enthält eine Bohrung 22, die zumindest in ihrem unteren Abschnitt zusammen mit der äußeren Mantelfläche der Akzeptorkammer 4 passend geschliffen ist, um die Akzeptorkammer präzise innerhalb des Gehäuses 10 zu fixieren. Dabei wird die Winkelstellung der Akzeptorkammer 4 gegenüber dem Gehäuse 10 durch einen in eine entsprechende Aussparung 24 des Gehäuseteils 12 hineinragenden Vorsprung 26 bestimmt.

Während das Gehäuseteil 12 konzentrisch zur Achse der Fensteröffnung 6 der so festgelegten Akzeptorkammer 4 eine Sichtöffnung 28 aufweist, besitzt das Gehäuseteil 14 gegenüberliegend, um die Fensteröffnung 6 herum, eine Durchbrechung 30, groß genug, um die Hautmembran berührungslos in sich aufzunehmen.

Wie weiterhin aus den Figuren 2 und 4 ersichtlich, kommt innerhalb der Durchbrechung 30 auf der Akzeptorkammer 4, genauer gesagt der darauf auf liegenden Hautmembran, der stirnseitige Rand 32 einer im wesentlichen zylindrischen Donorkammer 34 zur Auflage, in den zur Abdichtung ein O-Ring 36 eingelassen ist. Zu diesem Zweck weist die Donorkammer 34 einen nach außen hervortretenden Bund 38 und das Gehäuseteil 14 einen mit Außengewinde versehenen Kragen 40 auf, worauf eine den Bund 38 gegen die Akzeptorkammer 4 drückende Überwurfmutter 42 aufschraubbar ist. Durch diese Schraubverbindung im Verein mit dem O-Ring 36 wird die Donorkammer 34 dicht an der Akzeptorkammer 4 gehalten, wobei die Hautmembran ebenso dicht eingeschlossen wird, ohne daß es dazu etwa einer Verklebung bedarf.

An ihrem Außenende ist in die Donorkammer 34 dicht ein Schraubnippel 44 eingesetzt, auf den als Verschluß der Donorkammer 34 ein Schraubdeckel 46 aufschraubbar ist. Der Schraubdeckel 46 enthält ein Entlüftungsventil 48 in Form einer zentralen Verschlußschraube.

Bei der Anwendung der so weit beschriebenen Permeationszelle wird nun folgendermaßen verfahren:
Das Gehäuseteil 12 wird mit seiner Sichtöffnung 28 nach unten auf einen Tisch gelegt, worauf die Akzeptorkammer 4 in das Gehäuseteil 12 eingelegt wird. Sodann wird ein kreisrundes Hautpräparat mit einem Durchmesser, der denjenigen der Fensteröffnung 6 um etwa 4 mm überschreitet, konzentrisch auf die Fensteröffnung 6 aufgelegt, wobei, falls die Hautpermeation eines Wirkstoffs aus einem transdermalen therapeutischen System (TTS) untersucht werden soll, zunächst eine Probe dieses Systems auf die Außenseite des Hautpräparats aufgetragen wird. Sodann wird das Gehäuseteil 14 aufgelegt und mittels der Rändelmuttern 20 mit dem Gehäuseteil 12 verbunden. Danach wird innerhalb der Durchbrechung 30 des Gehäuseteils 14 die Donorkammer 34 auf das Hauptpräparat aufgesetzt und mittels der Überwurfmutter 42 mit dem Gehäuse 10 verbunden. Durch die Sichtöffnung 28 hindurch kann der korrekte Aufbau der Zelle kontrolliert werden.

Nach Aufrichten der Zelle wird die vorgesehene Akzeptorlösung in die Akzeptorkammer 4 eingefüllt, wonach die Akzeptorkammer mittels des Schraubdeckels 8 verschlossen wird. Dabei hat man es in der Hand, durch Variation der Füllung der Akzeptorkammer unterschiedlichen Permeationsfähigkeiten des zu untersuchenden Wirkstoffs Rechnung zu tragen. Bei stark permeierenden Wirkstoffen werden zweckmäßigerweise durch maximale Füllung die Sinkbedingungen, bei geringer Permeationsfähigkeit durch einen minimalen Füllstand die Nachweisempfindlichkeit optimiert.

Falls die Hautpermeation eines Wirkstoffs aus einer Lösung anstatt eines transdermalen therapeutischen Systems untersucht werden soll, wird statt Auftragens eines Wirkstoffs auf das Hautpräparat bei zusammengebauter, noch auf der Sichtöffnung 28 liegender Zelle die Donorkammer 34 mit der betreffenden Wirkstofflösung bis etwa zum Rand gefüllt, worauf bei geöffnetem Entlüftungsventil 48 der Schraubdeckel 46 aufgebracht wird. Dabei tritt überschüssige Wirkstofflösung durch das Entlüftungsventil 48 hindurch aus. Sodann wird dieses geschlossen.

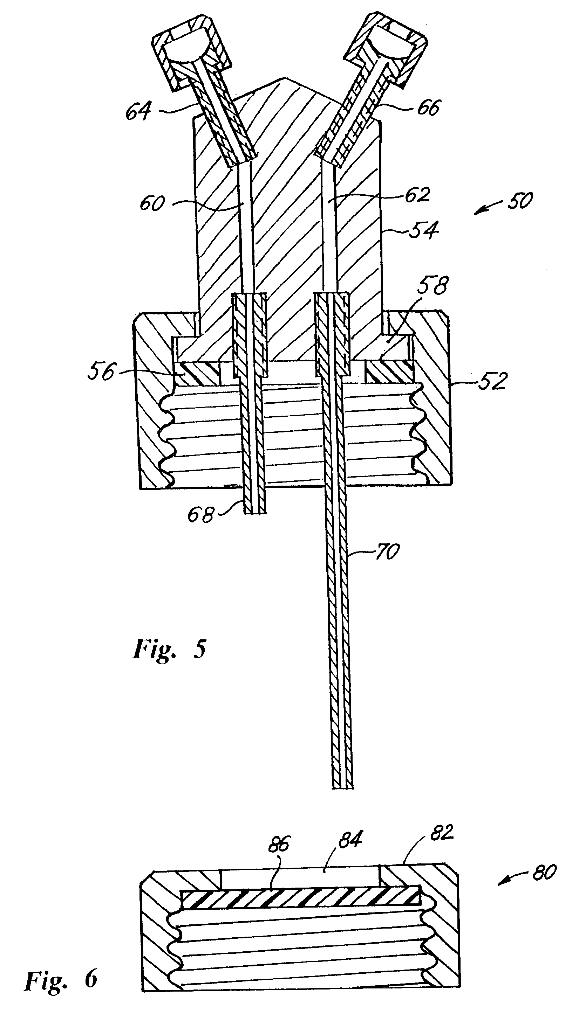

Soll die betreffende Permeationszelle die Probenaufgabevorrichtung einer HPLC-Anlage bilden, so wird anstatt des Schraubdeckels 8 aus den Figuren 1 und 2 ein solcher, 50, nach Fig. 5 verwendet. Dieser besteht im wesentlichen aus einer zu dem Gewinde 2 der Akzeptorkammer 4 passenden Überwurfmutter 52 und einem damit dicht an der Akzeptorkammer 4 anbringbaren Einsatz 54, der an seinem innenliegenden Ende einen über einen Dichtungsring 56 an der Stirnseite der Akzeptorkammer 4 abdichtend zur Anlage kommenden Flansch 58 trägt. Der Einsatz 54 enthält zwei axial durch ihn hindurchlaufende Kanäle 60 und 62, die an beiden Enden erweitert sind. In die außenseitigen Erweiterungen sind zwei Anschlußstutzen 64 und 66, in die innenseitigen Erweiterungen zwei Kapillaren 68 und 70 eingeschraubt. Während die zum Eintritt der Akzeptorlösung dienende Kapillare 68 kurz unterhalb des Einsatzes 54 endet, ragt die zum Austritt dienende Kapillare 70 weiter nach unten, beispielsweise bis etwa 15 mm vor den Zellenboden 72 (Fig. 4), um so den Füllstand der Akzeptorflüssigkeit in der Akzeptorkammer zu bestimmen. Durch das Sichtfenster 28 (Fig. 2) kann das Eintropfen der Akzeptorlösung aus der Kapillare 68 überwacht werden.

Fig. 6 zeigt noch einen weiteren Verschluß, 80, für die Akzeptorkammer 4, der eine laufende Probenentnahme hieraus ermöglicht. Der Verschluß 80 besteht aus einem Schraubdeckel ähnlich dem Schraubdeckel 8 aus den Figuren 1 und 2, der lediglich in seinem Boden 82 eine zentrale Aussparung 84 besitzt, in der ein eingelegtes Septum 86 zutage tritt. Das Septum 86 kann beispielsweise aus mit Polytetrafluorethylen beschichtetem Silikongummi bestehen und zugleich die Abdichtung des Schraubdeckels auf dem Rand der Akzeptorkammer 4 bilden.

Ein solcher Verschluß findet z.B. dann Anwendung, wenn die Permeationszelle mit einer Vielzahl weiterer in einem automatischen Probenentnahmegerät Verwendung findet. In diesem Fall wird zur zyklischen Probenentnahme eine Hohlnadel durch das Septum 86 hindurch in die Akzeptorkammer 4 eingeführt, nach deren Entfernung sich das Septum 86 jedesmal wieder schließt.

Das blockförmige Gehäuse 10 vermittelt der beschriebenen Permeationszelle Standfestigkeit. Darüber hinaus erleichtert es den Zusammenbau der Zelle unter Einfügung des Hautpräparats, wozu im übrigen keinerlei Hilfsmittel, wie z. B. Klebestreifen, erforderlich sind. Schließlich ergibt es, aus einem magnetisch neutralen Wärmeleiter, wie etwa Leichtmetall bestehend, seitens einer externen Heizvorrichtung, wie z. B. eines Heizwasserbades, einen guten, kontrollierbaren Wärmeübergang zu der Zelle, ohne etwa die Anwendung einer Magnetrühreinrichtung zu verhindern. Andererseits kann das Gehäuse 10 auch selbst elektrische Heizmittel für die Akzeptorkammer 4 enthalten, beispielsweise in Gestalt einer auf die Akzeptorkammer aufgeklebten Heizfolie, die beim Zusammenbau der Zelle mit elektrischen Kontakten des Gehäuses in Verbindung tritt (nicht gezeigt). Im Falle einer solchen elektrischen Beheizung wird das Gehäuse 10 zweckmäßigerweise aus einem wärmeisolierenden Material bestehen, wie z.B. Polyvinyldifluorid (PVDF), das sich zudem leicht und mit glatter Oberfläche spanabhebend bearbeiten läßt.

Die sich in der Akzeptorkammer 4 einstellende Temperatur kann mit Hilfe eines durch den Schraubdeckel 8 bzw. 50 hindurch in die Akzeptorkammer eingeführten Temperaturfühlers (nicht gezeigt) geregelt werden. Gewünschtenfalls können mehrere derartige Zellen raumsparend nebeneinander in eine gemeinsame Heiz- und/oder Rührvorrichtung eingesetzt werden.

## Patentansprüche

1. Permeationszelle zur in-vitro-Bestimmung der Hautpermeation von pharmazeutischen Wirkstoffen, mit einer Donorkammer (34) und einer davon trennbaren Akzeptorkammer (4), einem dazwischenliegenden Fenster zur abgedichteten Aufnahme einer Hautmembran sowie abgedichtet verschließbaren Füll- und Entleerungsöffnungen an beiden Kammern,
dadurch **gekennzeichnet**,
daß die Akzeptorkammer (4) als im Betrieb aufrechtstehendes zylindrisches Gefäß mit oberseitigem Verschluß (8; 50; 80) und seitlicher Fensteröffnung (6) in seinem bodennahen Bereich und die Donorkammer (34) als radial daran anschließender, an seinem Außenende verschließbarer Stutzen ausgebildet ist,
daß die Akzeptorkammer (4) bis auf ihren Verschluß (8; 50; 80) entnehmbar in ein sie passend umschließendes Gehäuse (10) eingesetzt ist, welches im Bereich der Fensteröffnung (6) der Akzeptorkammer eine entsprechende, etwas weitere Durchbrechung (30) aufweist, und
daß der die Donorkammer (34) bildende Stutzen konzentrisch zu der Fensteröffnung (6) abnehmbar an das Gehäuse (10) angeschraubt ist.

2. Permeationszelle nach Anspruch 1, dadurch **gekennzeichnet**, daß der die Donorkammer (34) bildende Stutzen stirnseitig einen auf dem Rand der Hautmembran zur Auflage kommenden O-Ring (36) trägt.

3. Permeationszelle nach Anspruch 1 oder 2, dadurch **gekennzeichnet**, daß der die Donorkammer (34) bildende Stutzen vermittels einer Überwurfmutter (42) an das Gehäuse (10) anschraubbar ist.

4. Permeationszelle nach einem der vorhergehenden Ansprüche, dadurch **gekennzeichnet**, daß der Verschluß (46) der Donorkammer (34) ein Entlüftungsventil (48) aufweist.

5. Permeationszelle nach einem der vorhergehenden Ansprüche, dadurch **gekennzeichnet**, daß der Verschluß (50) der Akzeptorkammer (4) voneinander getrennte Ein- und Austrittskanäle (60, 62) mit außenseitigen Anschlußmitteln (64, 66) zur Einfügung in eine sogenannte HPLC-Anlage oder dergleichen aufweist.

6. Permeationszelle nach Anspruch 5, dadurch **gekennzeichnet**, daß der betreffende Verschluß (50) innenseitig an die betreffenden Ein- und Austrittskanäle (60, 62) anschließende Kapillaren (68, 70) aufweist, vorzugsweise eine kürzere (68) an dem Eintrittskanal (60) und eine längere (70) an dem Austrittskanal (62).

7. Permeationszelle nach Anspruch 5 oder 6, dadurch **gekennzeichnet**, daß der betreffende Verschluß (50) im wesentlichen aus einer auf die Akzeptorkammer (4) aufschraubbaren Überwurfmutter (52) und einem von dieser gehaltenen Einsatz (54) besteht, der die Ein- und Austrittskanäle (60, 62) etc. enthält und von der Überwurfmutter (52) stirnseitig abdichtend an die Akzeptorkammer (4) anpreßbar ist.

8. Permeationszelle nach einem der Ansprüche 1 - 4, dadurch **gekennzeichnet**, daß der Verschluß (80) aus einem Schraubdeckel besteht, in dem ein von einer Hohlnadel durchstechbares gummielastisches Septum (86) zutage tritt.

9. Permeationszelle nach einem der vorhergehenden Ansprüche, dadurch **gekennzeichnet**, daß das Gehäuse (10) entlang einer zur Mittelachse seiner Durchbrechung (30) senkrechten Längsmittelebene (16) einer die Akzeptorkammer (4) in sich aufnehmenden Bohrung (22) geteilt ist.

10. Permeationszelle nach Anspruch 9, dadurch **gekennzeichnet**, daß die Bohrung (22) und die äußere Mantelfläche der Akzeptorkammer (4) zumindest im Bereich der Fensteröffnung (6) zueinander passend geschliffen sind.

11. Permeationszelle nach einem der vorhergehenden Ansprüche, dadurch **gekennzeichnet**, daß das Gehäuse (10) als im wesentlichen quaderförmiger Block gestaltet ist.

12. Permeationszelle nach einem der vorhergehenden Ansprüche, dadurch **gekennzeichnet**, daß das Gehäuse (10) aus Kunststoff, vorzugsweise Polyvinyldifluorid, oder aus Metall, vorzugsweise einem magnetisch neutralen Metall, wie vor allem Leichtmetall, besteht.

13. Permeationszelle nach einem der vorhergehenden Ansprüche, dadurch **gekennzeichnet**, daß das Gehäuse (10) ein elektrisches Heizelement enthält oder aufzunehmen vermag und im letzteren Fall vorzugsweise über elektrische Anschlußkontakte für das Heizelement verfügt.
